Europäisches Patentamt

European Patent Office

Office européen des brevets

(19)

(11) Veröffentlichungsnummer: **0 282 903**
**A2**

(12) **EUROPÄISCHE PATENTANMELDUNG**

(21) Anmeldenummer: **88103770.9**

(22) Anmeldetag: **10.03.88**

(51) Int. Cl.4: **C08G 14/08** , **C08L 97/02** ,
**//(C08L97/02,61:34)**

(30) Priorität: **18.03.87 DE 3708740**

(43) Veröffentlichungstag der Anmeldung:
**21.09.88 Patentblatt 88/38**

(84) Benannte Vertragsstaaten:
**AT BE CH DE FR GB IT LI NL SE**

(71) Anmelder: **BASF Aktiengesellschaft**
**Carl-Bosch-Strasse 38**
**D-6700 Ludwigshafen(DE)**

(72) Erfinder: **Matthias, Guenther, Dr.**
**Meergartenweg 25 a**
**D-6710 Frankenthal(DE)**
Erfinder: **Schatz, Hermann**
**Neubergstrasse 50**
**D-6730 Neustadt(DE)**
Erfinder: **Wittmann, Otto**
**Max-Beckmann-Strasse 13 b**
**D-6710 Frankenthal(DE)**
Erfinder: **Diem, Hans, Dr.**
**Kniebisstrasse 16**
**D-6800 Mannheim 1(DE)**

(54) **Alkalisch kondensierte Harnstoff-Phenol-Formaldehyd-Harzlösung, Verfahren zu ihrer Herstellung und ihre Verwendung bei der Herstellung von Spanplatten.**

(57) Es wird eine alkalisch kondensierte Harnstoff-Phenol-Formaldehyd-Harzlösung mit einem Trockengehalt von 38 bis 60 Gew.% vorgeschlagen, welche eine verbesserte Reaktivität aufweist. Diese Harzlösung ist dadurch gekennzeichnet, daß sie Dimethylolharnstoff und/oder Trimethylolharnstoff in einer Konzentration von 0 bis 5 Gew.%, bezogen auf das Gesamtgewicht der Harzlösung, enthält.

EP 0 282 903 A2

## Alkalisch kondensierte Harnstoff-Phenol-Formaldenhyd-Harzlösung, Verfahren zu ihrer Herstellung und ihre Verwendung bei der Herstellung von Spanplatten

Die Erfindung betrifft eine alkalisch kondensierte Harnstoff-Phenol-Formaldehyd-Harzlösung mit geringem Formaldehydgehalt, aber erhöhter Reaktivität, ein Verfahren zu ihrer Herstellung und ihre Verwendung bei der Herstellung von formaldehydarmen, wetterfesten Spanplatten.

Harnstoff-Phenol-Formaldehyd-Leimharze mit geringem Formaldehydgehalt sind seit langem bekannt. Nachteilig an den bekannten Harzen ist aber die Tatsache, daß sie aufgrund des geringen Formaldehydgehaltes relativ wenig reaktiv sind.

Der Erfindung liegt die Aufgabe zugrunde, eine relativ formaldehydarme, alkalisch kondensierte Harnstoff-Phenol-Formaldehyd-Harzlösung mit einem Trockengehalt von 38 bis 65 Gew.%, vorzugsweise 42 bis 58 Gew.%, bereitzustellen, welche eine verbesserte Reaktivität aufweist. Es soll auch ein Verfahren zur Herstellung der Harzlösung bereitgestellt werden.

Diese Aufgabe wird gelöst mit einer alkalisch kondensierten Harnstoff-Phenol-Formaldehyd-Harzlösung der genannten Art, die dadurch gekennzeichnet ist, daß sie Dimethylolharnstoff und/oder Trimethylolharnstoff in einer Konzentration von 0 bis 5 Gew.%, bezogen auf das Gesamtgewicht der Harzlösung, enthält.

Nach einer bevorzugten Ausführungsform enthält die erfindungsgemäße Harzlösung Dimethylolharnstoff und/oder Trimethylolharnstoff in einer Konzentration von 2 bis 4 Gew.%, insbesondere 2 bis 3 Gew.%, bezogen auf das Gesamtgewicht der Harzlösung.

Bevorzugt handelt es sich beim Dimethylolharnstoff um ein technisches Produkt, das auch Anteile von Monomethylolharnstoff und Trimethylolharnstoff, sowie gegebenenfalls oligomere Verbindungen enthält.

Nach einer bevorzugten Ausgestaltung der Erfindung erhält die Harnstoff-Phenol-Formaldehyd-Harzlösung Zusätze von Melamin-Formaldehyd-Harzen, Melamin-Harnstoff-Formaldehydharzen, Harnstoff-Formaldehydharzen, Resorcin-Formaldehyd-Harzen, oder Resorcin-Harnstoff-Formaldehyd-Harzen, zweckmäßig in einer Menge von 1 bis 20 Gew.%, bevorzugt 2,5 bis 10 Gew.%, bezogen auf das Gesamtgewicht der Harzlösung.

Das erfindungsgemäße Verfahren zur Herstellung der alkalisch kondensierten Harnstoff-Phenol-Formaldehyd-Harzlösung ist dadurch gekennzeichnet, daß man zuerst eine Harnstoff-Phenol-Formaldehyd-Harzlösung herstellt und anschließend mindestens einen der Bestandteile Dimethylolharnstoff und Trimethylolharnstoff einzeln oder im Gemisch, oder nach Einkondensation in ein Phenol-Formaldehydkondensat oder Harnstoff-Phenol-Formaldehydkondensat, zur Harzlösung zugibt.

Gegenstand der Erfindung ist auch die Verwendung der alkalisch kondensierten Harnstoff-Phenol-Formaldehyd-Harzlösung bei der Herstellung von formaldehydarmen, wetterfesten Spanplatten. Die Verwendung kann bei einschichtig oder mehrschichtig verleimten Spanplatten erfolgen, wobei man in Mittelschichten auch gewünschtenfalls Anteile an oligomerem Diphenylmethan-4,4'-diisocyanat einsetzen kann.

Erfindungsgemäß wurde festgestellt, daß die Reaktivität der genannten Leimharzlösungen angehoben wurde.

Die Erhöhung der Reaktivität beim erfindungsgemäßen Leimharz ist besonders wichtig bei der Verwendung als Mittelschichtharz, d.h. bei der Verleimung von Spanplatten, bei welcher in der Mittelschicht ein anderes Leimharz als in den Deckschichten eingesetzt wird. Bei den Mittelschichten steigt die Temperatur beim Pressen nicht so hoch an, wie bei den Deckschichten. Durch den erfindungsgemäßen Einsatz von Dimethylolharnstoff oder Trimethylolharnstoff im erfindungsgemäßen Leimharz wird eine Verkürzung der Preßzeit erzielt.

Das erfindungsgemäße alkalisch kondensierte Harnstoff-Phenol-Formaldehyd-Harz weist einen Trockengehalt von 38 bis 65 Gew.%, vorzugsweise 45 bis 60 Gew.%, insbesondere 50 bis 56 Gew.%, auf. Unter Trockengehalt wird hier der Rückstand verstanden, welcher nach dem Verdampfen des Wassers aus der Lösung bzw. des durch weitere Kondensation gebildeten Wassers zurückbleibt. Der Trockengehalt ist im Durchschnitt 8 bis 12 Gew.% geringer als der sogenannte Wertstoffgehalt, d.h. der Gehalt an Harzbildungskomponenten und Zuschlägen, abzüglich Wasser, die zur Herstellung der Leimharzlösung benötigt werden.

Das Molverhältnis Phenol:Formaldehyd:Harnstoff im erfindungsgemäßen Harz kann den Bereich 1:(1,5 bis 3,0):(0,3 bis 1,5) umfassen. Besonders bevorzugt sind molare Verhältnisse Phenol:Formaldehyd:Harnstoff von 1:(2 bis 2,7):(0,6 bis 1,3).

Als Methylolharnstoff setzt man den N,N'-Dimethylolharnstoff oder N,N',N'-Trimethylolharnstoff ein. Besonders bevorzugt ist die Verwendung von technischem Dimethylolharnstoff, welcher geringe Menge an Monomethylolharnstoff und Trimethylolharnstoff, sowie oligomere Verbindungen, enthalten kann. Der Zusatz an N,N'-Dimethylolharnstoff ist an sich rein additiv, man kann jedoch nicht ausschließen, daß nach der Zumischung noch in kleinem Umfang eine Reaktion stattfindet. Gewünschtenfalls kann man aber auch den Methylolharnstoff in stärkerem Maße reagieren lassen. Man kann auch den Methylolharnstoff in ein Phenol-Formaldehyd-Kondensat oder ein Harnstoff-Phenol-Formaldehyd-Kondensat einkondensieren und dieses Produkt zur Harzlösung geben.

Man setzt den Dimethylolharnstoff und/oder Trimethylolharnstoff in Mengen zwischen 0 und 5 Gew.%, insbesondere 1 und 5 Gew.%, ein. Ein bevorzugter Bereich liegt zwischen 2 und 4 Gew.%, optimale Ergebnisse werden bei einem Zusatz von 2 bis 3 Gew.% erzielt.

Der Dimethylolharnstoff und/oder Trimethylolharnstoff erhöht die Reaktivität. Diese kann als Gelierzeit oder besser als Preßzeit angegeben werden. Mit 2,1 Gew.% Dimethylolharnstoff wird die Preßzeit bei Spanplatten von 5,5 auf 5,0 min. gesenkt. Zwar erhöht sich die Formaldehydabspaltung, bleibt aber noch so tief, daß sie selbst den strengsten Anforderungen gerecht wird.

Man kann den Dimethylolharnstoff und/oder Trimethylolharnstoff als Pulver oder als wäßrige Lösung, beispielsweise in einer Konzentration von etwa 50 Gew.% zum Leimharz zugeben. Das Molverhältnis Dimethylolharnstoff zu freiem Formaldehyd kann beispielsweise zwischen 1:1,5 und 1:2,5 liegen.

Die Erfindung wird durch das nachstehende Beispiel weiter erläutert.

Beispiel

Mittelschichtharz, alkalireich

In einer Rührapparatur wurden 940 Teile Phenol (10,0 Mol), 204 Teile Wasser und 225 Teile 50 %ige Natronlauge vorgelegt und bis 90°C aufgeheizt.

Innerhalb von 45 Minuten wurden 1 940 Teile 40 %ige Formaldehyd-Lösung (25,9 Mol) zudosiert. Hierbei stieg die Temperatur bis zum Sieden (102°C) an. Bei dieser Temperatur wurde das Reaktionsgemisch 10 Minuten gehalten. Anschließend wurde die Temperatur auf 85°C abgesenkt und bei dieser Temperatur kondensiert, bis 300 mPa.s erreicht sind. Dann wurden weitere 450 Teile 50 %ige Natronlauge hinzugefügt und bei 80°C auf eine Viskosität von 2500 mPa.s weiterkondensiert. Das so erhaltene Phenol-Formaldehyd-Harz wurde auf 40°C abgekühlt und mit 750 Teilen Harnstoff abgemischt, indem dieser darin aufgelöst wurde. Dabei fiel die Temperatur durch die Lösungsenthalpie auf ca. 25°C ab.

Das Leimharz hat folgende Eigenschaften:

Viskosität bei 20°C:     516 mPa.s
Dichte bei 20°C:     1.235 g/cm$^3$
Trockengehalt:     51,9 %
Alkaligehalt als NaOH gerechnet:     6,2 %
Gelierzeit bei 100°C:     30 Minuten
Preßzeit 180°C, 18 mm Platte:     5,5 Minuten
entspr. 18 s/mm Plattendicke

In 980 Teilen Grundharz wurden 20 Teile Dimethylolharnstoff aufgelöst. Dadurch entsteht eine Harzlösung mit 2 % Dimethylolharnstoff.

Das so modifizierte Harz hat folgende Eigenschaften:

Viskosität bei 20°C:     456 mPa.s
Dichte bei 210°C:     1,240 g/cm$^3$
Trockengehalt:     53,8 %
Alkaligehalt als NaOH gerechnet:     6,1 %
Gelierzeit bei 200°C:     22 Minuten
Preßzeit 180°C, 18 mm Platte:     5,0 Minuten
entspr. 16,6 sec/mm Plattendicke

Die Reaktivität ist also stark verbessert. Sie beträgt, als Gelierzeit bezeichnet, 22 Minuten; die Preßzeit beträgt 5,0 Minuten. Das Grundharz weist 30 Minuten auf. Seine Preßzeit liegt bei 5,5 Minuten.

**Ansprüche**

1. Alkalisch kondensierte Harnstoff-Phenol-Formaldehyd-Harzlösung mit einem Trockengehalt von 38 bis 65 Gew.%, insbesondere 42 bis 58 Gew.%, dadurch gekennzeichnet, daß sie Dimethylolharnstoff und/oder Trimethylolharnstoff in einer Konzentration von 0 bis 5 Gew.%, bezogen auf das Gesamtgewicht der Harzlösung, enthält.

2. Alkalisch kondensierte Harnstoff-Phenol-Formaldehyd-Harzlösung nach Anspruch 1, dadurch gekennzeichnet, daß sie Dimethylolharnstoff und/oder Trimethylolharnstoff in einer Konzentration von 2 bis 4 Gew.%, insbesondere 2 bis 3 Gew.%, bezogen auf das Gesamtgewicht der Harzlösung, enthält.

3. Alkalisch kondensierte Harnstoff-Phenol-Formaldehyd-Harzlösung nach einem der Ansprüche 1 oder 2, dadurch gekennzeichnet, daß es sich beim Dimethylolharnstoff um ein technisches Produkt handelt, das auch Anteile von Monomethylolharnstoff und Trimethylolharnstoff aufweist.

4. Alkalisch kondensierte Harnstoff-Phenol-Formaldehyd-Harzlösung nach einem der Ansprüche 1 bis 3, dadurch gekennzeichnet, daß sie Zusätze von Melamin-Formaldehyd-Harzen, Melamin-Harnstoff-Formaldehyd-Harzen, Harnstoff-Formaldehydharzen, Resorcin-Formaldehyd-Harzen oder Resorcin-Harnstoff-Formaldehydharzen, aufweist.

5. Verfahren zur Herstellung der alkalisch kondensierten Harnstoff-Phenol-Formaldehyd-Harzlösung nach einem der Ansprüche 1 bis 4, dadurch gekennzeichnet, daß man zuerst eine Harnstoff-Phenol-Formaldehyd-Harzlösung herstellt und anschließend mindestens einen der Bestandteile Dimethylolharnstoff und Trimethylolharnstoff einzeln oder im Gemisch, oder nach Einkondensation in ein Phenol-Formaldehydkondensat oder Harnstoff-Phenol-Formaldehydkondensat, zur Harzlösung zugibt.

6. Verwendung der alkalisch kondensierten Harnstoff-Phenol-Formaldehyd-Harzlösung nach einem der Ansprüche 1 bis 4 und Anspruch 5 bei der Herstellung von formaldehydarmen, wetterfesten Spanplatten.